# EUROPÄISCHE PATENTSCHRIFT

(11) **EP 0 731 012 B1**
(45) Veröffentlichungstag und Bekanntmachung des Hinweises auf die Patenterteilung: **25.03.1998**
(21) Anmeldenummer: 96101160.8
(22) Anmeldetag: 27.01.1996
(51) Int. Cl.: B62D 1/18

(54) **Klemmvorrichtung für eine einstellbare Lenksäule in Kraftfahrzeugen**
Clamping device for an adjustable steering column in motor vehicles
Dispositif de serrage pour une colonne de direction réglable dans des véhicules automobiles

(30) Priorität: 23.02.1995 DE 19506210
(43) Veröffentlichungstag der Anmeldung: 11.09.1996
(73) Patentinhaber: LEMFÖRDER METALLWAREN AG., 49441 Lemförde (DE)
(72) Erfinder: Uphaus, Ludger, D-49434 Neuenkirchen (DE)

(56) Entgegenhaltungen:
- EP-A- 0 345 101
- EP-A- 0 537 454
- DE-A- 4 016 163

## Beschreibung

Die Erfindung betrifft eine Klemmvorrichtung für eine einstellbare Lenksäule in Kraftfahrzeugen nach dem Oberbegriff des Patentanspruches 1.

Diese Gattungsmerkmale sind aus DE 39 20 783 -C1- bekannt. Der Klemmbolzen ist in diesem Falle dreiteilig ausgeführt und besteht aus einer Gewindehülse und zwei Gewindezapfen mit einem Links- und mit einem Rechtsgewinde, so daß durch Verdrehung der Gewindehülse Klemmkräfte ausgeübt werden, durch die die begrenzt elastisch ausgebildeten Halter mit Reibflächen gegen Reibflächen am Rohrgehäuse preßbar sind. Bei der Klemmvorrichtung nach der DE 41 18 863 erfolgt die Klemmung durch Kippstifte, die außerhalb eines der beiden Halter zwischen einem Bolzenbund und einer auf dem Klemmbolzen drehbar abgestützten Handhabe angeordnet sind, so daß diese Handhabe bei der Klemmung Axialkraftkomponenten überträgt. Eine ähnliche Ausführung zur Ausübung der Klemmkräfte auf den Klemmbolzen ist aus EP-B1-0 242 928 bekannt, wobei Axialkräfte auf die Halter durch ein Nadellager übertragen werden. Gegenüber Rastierungen mit formschlüssigem Eingriff haben solche reibschlüssigen Klemmvorrichtungen den Vorteil, daß die Verstellung der Lenksäule im wesentlichen geräuschlos, vor allem aber stufenlos, erfolgen kann. Die Verstellung erfolgt im Bereich von Schlitzen, die in sich kreuzender Anordnung sowohl in den karosseriefesten Haltern als auch in mit dem Rohrgehäuse fest verbundenen Bauteilen angeordnet sind. Durch die kreuzweise Überdeckung der Schlitze ergibt sich ein durchgehendes Vierkantloch, in dem der mit dem Klemmechanismus ausgestattete Klemmbolzen angeordnet ist.

Aus der DE 40 34 710 A1 ist eine Klemmvorrichtung bekannt, bei der das Klemmelement um eine rechtwinklig, aber im Abstand zu der Längsachse des Mantelrohres verlaufende Achse schwenkbar angeordnet ist. Dabei bewirken Axialkräfte auf das Mantelrohr ein Drehmoment auf das Klemmelement und damit eine Verkantung desselben auf dem Mantelrohr. Durch die Schrägstellung des Klemmelements wird die Klemmwirkung auf das Mantelrohr bis zu einer Verformung desselben verstärkt.

Die Klemmkräfte dieser Systeme sind für den normalen Fahrbetrieb ausreichend, jedoch werden für Fahrzeuge, die mit einem Airbag ausgerüstet werden sollen, höhere Klemmkräfte gefordert, damit die Lenksäule beim Aufprall des Fahrers auf den Airbag in der eingestellten Lenkradposition verbleibt. Eine Vergrößerung der Klemmfläche hat andererseits einen Komfortverlust zur Folge.

Dementsprechend ist es Aufgabe der Erfindung, eine Klemmvorrichtung der eingangs genannten Bauart in der Weise weiterzubilden, daß bei einer möglichen Überschreitung der durch die Klemmvorrichtung ausgeübten Klemmkraft selbsttätig eine möglichst formschlüssige Verriegelung des Rohrgehäuses der Lenksäule mit den an der Karosserie festen Haltern erfolgt.

Die Erfindung löst diese Aufgabe durch Ausbildungsmerkmale nach dem Kennzeichen des Patentanspruches 1.

Die Schräglage des Sperrgliedes bedingt eine Sperrgliedlänge zwischen der Schwertkante und der Abstützung, die größer ist als der Abstand der Abstützung von dem an dem Rohrgehäuse festen Bauteil, so daß sich bei einer Verschiebung dieses Bauteiles unter Überwindung der durch die maximale Klemmkraft erzielten Reibung die Schwertkante verstärkt gegen das genannte Bauteil drückt und dadurch die Klemmkraft vergrößert. Die Schwertkante kann sich schließlich in die Oberfläche des an dem Rohrgehäuse festen Bauteiles eingraben und dadurch eine formschlüssige Wegbegrenzung der Verschiebung des Rohrgehäuses gegenüber den an der Karosserie festen Haltern bewirken.

Bei einer bevorzugten Ausführungsform ist das Sperrglied in einem gegen Federwirkung am Klemmbolzen verschieblich gelagerten Halter beweglich angeordnet und durch die axiale Klemmbewegung des Klemmbolzens mit der Schwertkante gegen das am Rohrgehäuse feste Bauteil schwenkbar. Erreicht wird dadurch eine Ausbildung, bei der durch die Klemmbewegung des Klemmbolzens auch das Sperrglied bewegt wird, so daß es beim Lösen der Klemmverbindung außer Eingriff und beim Klemmen in Wirkungsfunktion gebracht wird. Zu diesem Zweck stützt sich das Sperrglied mit einer runden Stützfläche in einer komplementären Schale am Widerlager ab, welches fest mit dem Klemmbolzen verbunden ist. Das Sperrglied ist am Klemmbolzen vorzugsweise lösbar gehalten und durch eine Schraubenfeder in Wirkungsrichtung belastet, wobei diese Anlenkung des Sperrgliedes am Klemmbolzen als Sollbruchstelle ausgebildet ist, so daß die lösbare Anlenkung des Sperrgliedes an dem Halteelement auf dem Klemmbolzen bricht, sobald die Klemmverbindung zwischen den an der Karosserie festen Haltern und dem Rohrgehäuse durchrutscht.

Erreicht wird durch die Erfindungsmerkmale eine aus wenigen robusten Einzelteilen bestehende und in der Funktion zuverlässige Vorrichtung zur Sicherung der Verbindung zwischen den karosseriefesten Haltern und dem Rohrgehäuse der Lenksäule auch in jenen Fällen, in denen der Airbag in Funktion tritt.

In der Zeichnung ist ein Ausführungsbeispiel der Erfindung dargestellt. Es zeigen:
- Figur 1: einen Schnitt der gelösten Klemmvorrichtung in einer durch die Längsachse des Rohrgehäuses gelegten Schnittebene,
- Figur 2: einen Querschnitt senkrecht zur Schnittebene der Figur 1 und
- Figur 3: einen Schnitt entsprechend Figur 1 durch die gespannte Klemmvorrichtung.

Zur verstellbaren Festlegung des Rohrgehäuses 1 einer in der Neigung verstellbaren Lenksäule sind bei dem Ausführungsbeispiel zwei zueinander parallele Halter 2 im Querschnitt U-förmig miteinander verbunden und mit abgewinkelten Flanschen an der Karosserie eines Kraftfahrzeuges befestigbar. An dem Rohrgehäuse 1 ist ein im Querschnitt ebenfalls U-förmiger Klemmflansch 3 ausgebildet, der auf der Außenseite Reibflächen aufweist, welche mit Gegenreibflächen an den Haltern 2 auf beiden Seiten des Rohrgehäuses 1 zusammenwirken. Zur Ausübung ausreichender Klemmkräfte durchdringt ein Klemmbolzen 4 sowohl die beiden seitlichen Halter 2 als auch die mit dem Rohrgehäuse 1 fest verbundenen Klemmflansche 3. Die Verstellbewegung wird durch Schlitze erreicht, die in sich kreuzender Anordnung sowohl in den Haltern 2 als auch in dem Klemmflansch 3 vorgesehen sind. An dem einen Ende stützt sich der Klemmbolzen 4 mit einer Gewindemutter 5 auf der Außenseite gegen einen der beiden Halter 2 ab, so daß durch Verdrehung der Gewindemutter 5 eine Einstellmöglichkeit für die Klemmkraft gegeben ist. An dem gegenüberliegenden Ende des Klemmbolzens 4 ist ein Klemmechanismus ausgebildet, der im Falle des Beispieles aus zwei sich einerseits gegen ein festes Widerlager 6 und andererseits gegen ein Widerlager 7 am Klemmbolzen 4 abstützenden Kippstiften 8 besteht, so daß durch Verschwenkung des Widerlagers 7 mittels einer Handhabe 9 axiale Klemmkräfte auf den Klemmbolzen ausgeübt werden, wie es an sich bekannt ist, um eine reibschlüssige Verbindung der Halter 2 mit den Klemmflanschen 3 an dem Rohrgehäuse 1 herzustellen.

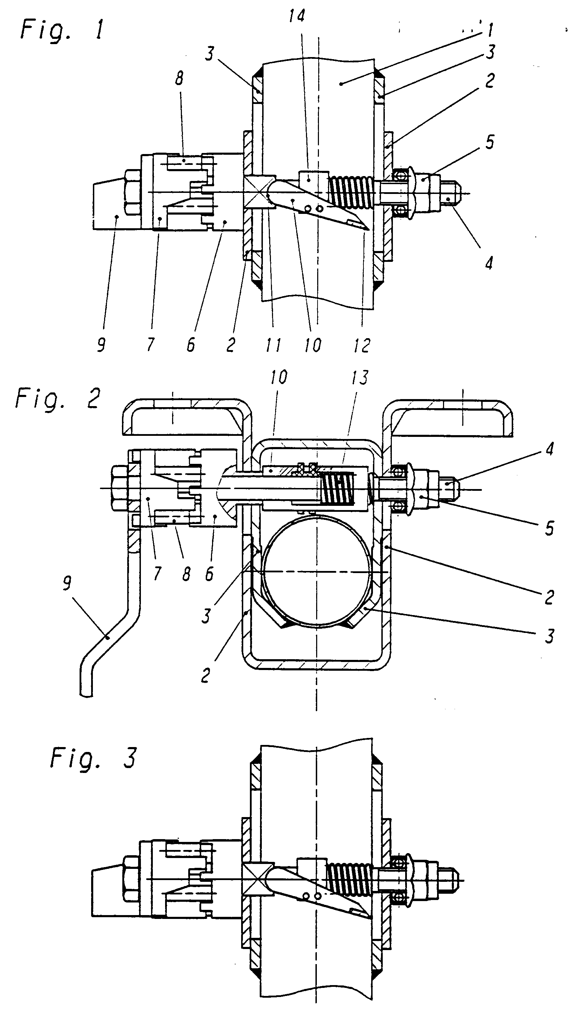

Zusätzlich ist ein Sperrglied 10 vorgesehen, welches sich einerseits gegen ein wenigstens axial am Klemmbolzen 4 festgelegtes Widerlager 11 abstützt und andererseits unter Einschluß eines Winkels mit der Längsachse des Klemmbolzens 4 schräg nach unten gegen den am Rohrgehäuse 1 festen Klemmflansch 3 mit der Schwertkante 12 gerichtet ist. Das Sperrglied 10 ist in einem gegen Federwirkung am Klemmbolzen verschieblich gelagerten Halteelement beweglich angeordnet und durch die axiale Klemmbewegung des Klemmbolzens mit der Schwertkante 12 gegen den Klemmflansch 3 schwenkbar. Dazu stützt sich eine Schraubenfeder 13 einerseits gegen das axial auf dem Klemmbolzen 4 verschiebbare Halteelement 14 und andererseits gegen den Klemmflansch 3 oder auch gegen einen Bund am Klemmbolzen 4 ab. Beim Lösen des Klemmechanismus verschiebt die Feder 13 das Halteelement 14 axial auf dem Klemmbolzen 4 und schiebt dadurch das mit ihm verbundene Sperrglied 10, so daß die Schwertkante 12 nicht in Berührung mit dem Klemmflansch 3 ist. Eine Bewegung des Klemmbolzens in Gegenrichtung beim Spannen des Klemmechanismus bewirkt eine Verschiebung des Sperrgliedes in Gegenrichtung, so daß die Schwertkante 12 erneut gegen den Klemmflansch 3 oder eventuell auch ein anderes fest mit dem Rohrgehäuse 1 verbundenes Bauteil zur Anlage kommt. Die feste Verbindung des Sperrgliedes 10 mit dem Halteelement 14 wird vorzugsweise als Sollbruchstelle ausgebildet, so daß diese Verbindung entweder auseinanderfällt oder bricht, wenn die Schwertkante 12 des Sperrgliedes beim Durchrutschen der Reibverbindung zwischen den Klemmflanschen mitgenommen und das Sperrglied dadurch um die Lagerung am Widerlager 11 verschwenkt wird. Figur 1 zeigt die Lage des Sperrgliedes bei gelöster Klemmverbindung, während Figur 3 die Lage des Sperrgliedes bei gespannter Klemmverbindung wiedergibt.

### BEZUGSZEICHENLISTE:

- 1: Rohrgehäuse
- 2: Halter
- 3: Klemmflansch
- 4: Klemmbolzen
- 5: Gewindemutter
- 6: Widerlager
- 7: Widerlager
- 8: Kippstift
- 9: Handhabe
- 10: Sperrglied
- 11: Widerlager
- 12: Schwertkante
- 13: Feder
- 14: Halteelement

## Patentansprüche

1. Klemmvorrichtung für eine einstellbare Lenksäule in Kraftfahrzeugen, bei der ein in Richtung seiner Längsachse verstellbares Rohrgehäuse zwischen zwei an der Karosserie festen Haltern durch einen Klemmechanismus mit einem die beiden Halter quer zur Längsachse des Rohrgehäuses durchdringenden und durch eine Handhabe betätigbaren Klemmbolzen festklemmbar ist, dadurch gekennzeichnet, daß ein eine Schwertkante (12) aufweisendes Sperrglied (10) vorgesehen ist, welches sich einerseits gegen ein am Klemmbolzen (4) axial festgelegtes Widerlager (11) abstützt und andererseits unter Einschluß eines Winkels mit der Längsachse des Klemmbolzens (4) schräg nach unten gegen ein am Rohrgehäuse (1) festes Bauteil (3) mit der Schwertkante (12) gerichtet ist.

2. Klemmvorrichtung nach Anspruch 1, dadurch gekennzeichnet, daß das Sperrglied (10) in einem gegen Federwirkung am Klemmbolzen (4) verschieblich gelagerten Halteelement (14) beweglich angeordnet und durch die axiale Klemmbewegung des Klemmbolzens (4) mit der Schwertkante (12) gegen das am Rohrgehäuse (1) feste Bauteil (3) schwenkbar ist.

3. Klemmvorrichtung nach den Ansprüchen 1 und 2, dadurch gekennzeichnet, daß das Sperrglied (10) sich mit einer runden Stützfläche in einer komplementären Stützschale am Widerlager (11) abstützt.

4. Klemmvorrichtung nach den Ansprüchen 1 bis 3, dadurch gekennzeichnet, daß das Sperrglied (10) am Klemmbolzen (4) lösbar gehalten und in Wirkungsrichtung durch eine Feder (13) belastet ist.

5. Klemmvorrichtung nach den Ansprüchen 1 bis 4, dadurch gekennzeichnet, daß die Anlenkung des Sperrgliedes (10) am Klemmbolzen (4) als Sollbruchstelle ausgebildet ist.

## Claims

1. Clamping device for an adjustable steering column in motor vehicles, wherein a tubular housing displaceable in the direction of its longitudinal axis is tightly clampable between two holders, which are fastened to the body work, by means of a clamping mechanism having a clamping bolt, which penetrates both holders at right angles to the longitudinal axis of the tubular housing and is operable by means of a handle, characterized in that a locking element (10) having a sword edge (12) is provided, which on the one hand is supported against an abutment (11) axially fixed on the clamping bolt (4) and on the other hand extends at an angle to the longitudinal axis of the clamping bolt (4) with the sword edge (12) directed obliquely down towards a structural part (3) fastened to the tubular housing (1).

2. Clamping device according to claim 1, characterized in that the locking element (10) is movably disposed in a retaining element (14), which is supported displaceably counter to spring action on the clamping bolt (4), and as a result of the axial clamping motion of the clamping bolt (4) is capable of swivelling with the sword edge (12) towards the structural part (3) fastened to the tubular housing (1).

3. Clamping device according to claims 1 and 2, characterized in that the locking element (10) is supported by means of a round supporting surface in a complementary supporting dish of the abutment (11).

4. Clamping device according to claims 1 to 3, characterized in that the locking element (10) is releasably held on the clamping bolt (4) and loaded in operating direction by means of a spring (13).

5. Clamping device according to claims 1 to 4, characterized in that the point of articulation of the locking element (10) on the clamping bolt (4) is designed as a predetermined breaking point.

## Revendications

1. Dispositif de serrage, pour colonne de direction réglable disposée dans un véhicule automobile, dans lequel un boîtier tubulaire réglable suivant la direction de son axe longitudinal peut être immobilisé par serrage, entre deux supports fixes sur la carrosserie, au moyen d'un mécanisme de serrage comportant une tige de serrage traversant les deux supports transversalement à l'axe longitudinal du boîtier tubulaire et manoeuvrable au moyen d'une manette, caractérisé en ce qu'il est prévu un organe de blocage (10), comportant un bord en forme de lame (12), qui, d'une part, prend appui sur un appui (11) fixé axialement sur la tige de serrage (4) et, d'autre part, par le bord en forme de lame (12), est orienté, en faisant un certain angle avec l'axe longitudinal de la tige de serrage (4), obliquement vers le bas en direction d'une pièce structurelle (3) fixe sur le boîtier tubulaire (1).

2. Dispositif de serrage suivant la revendication 1, caractérisé en ce que l'organe de blocage (10) est disposé d'une manière mobile dans un élément de maintien (14) monté coulissant sur la tige de serrage (4) à l'encontre de l'action d'un ressort et, sous l'effet du mouvement axial de serrage de la tige de serrage (4), peut basculer, par le bord en forme de lame (12), par rapport à la pièce structurelle (3) fixe sur le boîtier tubulaire (1).

3. Dispositif de serrage suivant les revendications 1 et 2, caractérisé en ce que l'organe de blocage (10) prend appui, par une surface d'appui arrondie, dans une cuvette d'appui complémentaire située sur l'appui (11).

4. Dispositif de serrage suivant l'une des revendications 1 à 3, caractérisé en ce que l'organe de blocage (10) est maintenu sur la tige de serrage (4) d'une manière séparable et est sollicité par un ressort (13) dans la direction d'action.

5. Dispositif de serrage suivant les revendications 1 à 4, caractérisé en ce que l'articulation de l'organe de blocage (10) sur la tige de serrage (4) est réalisée sous forme d'un emplacement destiné à la rupture.
